# EUROPEAN PATENT APPLICATION

(11) **EP 3 550 782 A1**
(43) Date of publication of application: **09.10.2019**
(21) Application number: 17876156.5
(22) Date of filing: 02.11.2017
(51) Int. Cl.: H04L 29/06, H04L 29/08

(54) **RESOURCE MANAGEMENT METHOD AND SYSTEM**

(30) Priority: 30.11.2016 CN 201611089077
(71) Applicant: ZTE Corporation, Shenzhen, Guangdong 518057 (CN)
(72) Inventor: LU, Yunxu, Shenzhen Guangdong 518057 (CN)
(74) Representative: Aipex B.V.
(86) International application number: PCT/CN2017/109054
(87) International publication number: WO 2018/099234

(57) **Abstract**

Disclosed are a resource management method and system. The resource management method includes: receiving a resource application request, where the resource application request includes a resource identifier of a requested resource; selecting a physical network function or a virtual network function according to the resource identifier and a preset resource policy; and requesting the resource from the selected physical network function or virtual network function.

## Description

### TECHNICAL FIELD

The present invention relates to the field of communications and, for example, to a resource management method and system.

### BACKGROUND

In current network functions, in order to maximize the use of old equipment to reduce costs, the virtual network function does not completely replace the physical network function, the virtual network function and the physical network function will coexist over a long period of time. However, resources for the physical network function and resources for the virtual network function are separately managed, and users are provided with different types of resources.

The physical network function has a fixed resource capacity which is difficult to extend, and the resources for the physical network function will gradually be migrated to the virtual network function with the development of technologies. The virtual network function has a dynamic resource capacity which is easy to extend. A new virtual network function can be created by using a Network Function Virtualization Orchestrator (NFVO), thereby expanding available resources for the virtual network function. The virtual network function will gradually replace the physical network function.

China Telecom has proposed in CTNET-2025 network architecture white paper to implement unified operation and management on the physical and virtual networks based on a new-generation operation support system (OSS), achieving effective synergy of physical resources and virtual resources and providing a traffic-oriented, on-demand and automated network resource provision capability. Therefore, operators must perform unified management on physical network resources and virtual network resources in their future OSS systems.

In an existing solution to the management of physical network function resources and virtual network function resources, a user can directly access different network functions. Therefore, the user can only access the physical network function resource or only access virtual network function resource. A unified resource management mechanism is required.

### SUMMARY

The following is a summary of the subject matter described herein in detail. The summary is not intended to limit the scope of the claims.

In related network function resource management, a user can only access the physical network function resource or can only access the virtual network function resource, and there is no unified resource management mechanism. Therefore, resource equalization in different network functions cannot be achieved. Once a resource is allocated, it is difficult to migrate the resource to other network functions. The resource of the physical network function and the resource of the virtual network function resource cannot be uniformly scheduled and allocated, causing that the two resources cannot be used evenly and the resources cannot be migrated between different network functions. When the virtual network function resources are insufficient, a new virtual network function resource cannot be automatically added.

Embodiments of the present invention provide a resource management method and system to at least solve the problem in the existing art that the resource of the physical network function resource and the resource of the virtual network function cannot be uniformly scheduled and allocated.

According to an aspect of the present invention, provided is a resource management method. The resource management method includes receiving a resource application request, where the resource application request includes a resource identifier of a requested resource; selecting a physical network function or a virtual network function according to the resource identifier and a preset resource policy; and requesting the resource from the selected physical network function or virtual network function.

Alternatively, the resource policy includes a resource distribution preferential rule and a resource distribution common rule. The resource distribution preferential rule is set for preferentially selecting which network function or what type of network function. For example, in the network function selection, the virtual network function resource is preferential or the resource equalization is preferential. The resource distribution common rule is that the network function selection is carried out according to original distribution of the requested resource without considering the resource distribution preferential rule.

Alternatively, selecting the physical network function or the virtual network function according to the resource identifier and the preset resource policy includes steps described below.

The physical network function or the virtual network function is selected as a target network function of a resource application according to the resource distribution preferential rule.

A network function where the resource identifier is located is determined according to the resource distribution common rule.

It is determined whether the target network function of the resource application is consistent with the network function where the resource identifier is located, and based on a determining result that the target network function of the resource application is not consistent with the network function where the resource identifier is located, an exception record is made in an exception table, where the exception record at least includes the resource identifier and the selected network function.

Alternatively, selecting the physical network function or the virtual network function according to the resource identifier and the resource distribution common rule includes the following step.

A network function where the resource identifier is located is selected as a target network function of the resource application according to the resource distribution common rule.

Alternatively, after requesting the resource from the selected physical network function or virtual network function, the method further includes the following step.

After a resource application response returned by the selected network function is received, the resource application response is returned to a resource applicant.

Alternatively, the method further includes the following steps.

A resource access request is received, where the resource access request includes a resource identifier of a resource to be accessed.

A network function where the resource to be accessed is located is determined according to the resource identifier of the resource to be accessed.

The resource access request is initiated to the network function where the resource to be accessed is located.

Alternatively, determining, according to the resource identifier of the resource to be accessed, the network function where the resource to be accessed is located includes the following steps.

The exception table is queried for determining whether the exception table has an exception record of the resource identifier of the resource to be accessed. Based on a query result that the exception table has the exception record of the resource identifier of the resource to be accessed, it is determined that a network function in the exception record is the network function where the resource to be accessed is located. Based on a query result that the exception table has no exception record of the resource identifier of the resource to be accessed, the network function where the resource to be accessed is located is determined according to the resource distribution common rule.

Alternatively, after initiating the resource access request to the network function where the resource to be accessed is located, the method further includes the following step.

After a resource access response returned by the network function is received, the resource access response is returned to a user.

Alternatively, the method further includes the following steps.

A resource migration request is received, where the resource migration request includes a resource identifier of a resource to be migrated.

A source network function and a target network function for a resource migration are determined according to the resource identifier.

The resource migration is performed between the source network function and the target network function.

Alternatively, determining the source network function and the target network function for the resource migration according to the resource identifier includes the following steps.

The exception table is queried for determining whether the exception table has an exception record of the resource identifier of the resource to be migrated. Based on a query result that the exception table has the exception record of the resource identifier of the resource to be migrated, a network function in the exception record is determined as the source network function of the resource to be migrated. Based on a query result that the exception table has no exception record of the resource identifier of the resource to be migrated, the source network function where the resource to be migrated is located is determined according to the resource distribution common rule.

The target network function of the resource to be migrated is determined according to a migration policy.

Alternatively, performing resource migration between the source network function and the target network function includes the following steps.

It is determined whether the source network function is consistent with the target network function. Based on a determining result that the source network function is consistent with the target network function, a migration success response is returned. Based on a determining result that the source network function is not consistent with the target network function, a resource access request is initiated to the source network function. After a resource access response is acquired from the source network function, the resource application request is initiated to the target network function. After a resource application success response is acquired from the target network function, the resource to be migrated is deleted from the source network function.

Alternatively, after performing the resource migration between the source network function and the target network function, the method further includes the following step.

The exception record in the exception table is updated according to the migrated resource, and a resource migration response is returned to a resource migration requester.

Alternatively, the method further includes the following step.

A virtual network function resource is created when it is monitored that a usage rate of the virtual network function resource exceeds a threshold.

Alternatively, creating the virtual network function resource includes the following steps.

A creatable network function is acquired from a virtual resource creation rule table, where the virtual resource creation rule table is used for maintaining states of all network function resources, and the state includes a usable state and a creatable state.

A virtual network function resource to be preferentially created is determined according to a virtual resource creation preferential rule and is created. The virtual resource creation rule table is updated after the virtual network function resource is successfully created.

According to another aspect of the present invention, provided is a resource management system. The resource management system includes a scheduler and a policy library.

The scheduler is configured to receive a resource application request including a resource identifier of the requested resource, select a physical network function or a virtual network function according to the resource identifier and a preset resource policy in the policy library, and request the resource from the selected physical network function or virtual network function.

The policy library is configured to provide the resource policy and maintain the resource policy.

Alternatively, the resource policy includes a resource distribution preferential rule and a resource distribution common rule. The resource distribution preferential rule includes at least one of: a virtual network function resource preferential rule and a resource equalization preferential rule.

Alternatively, the policy library is further configured to provide and maintain the resource distribution preferential rule, the resource distribution common rule and an exception table.

The scheduler is further configured to select the physical network function or the virtual network function as a target network function for a resource application according to the resource distribution preferential rule, determine a network function where the resource identifier is located according to the resource distribution common rule, determine whether the resource application's target network function is consistent with the network function where the resource identifier is located, and if the resource application's target network function is not consistent with the network function where the resource identifier is located, make an exception record in the exception table, where the exception record at least includes the resource identifier and the selected network function.

Alternatively, the scheduler is further configured to return a resource application response to a resource applicant after receiving the resource application response returned by the selected network function.

Alternatively, the scheduler is further configured to receive a resource access request including a resource identifier and a resource attribute of a resource to be accessed, determine, according to the resource identifier and the resource attribute of the resource to be accessed, a network function where the resource to be accessed is located, and initiate the resource access request to the network function where the resource to be accessed is located.

Alternatively, the scheduler is further configured to query the exception table in the policy library to determine whether the exception table in the policy library has an exception record of the resource identifier of the resource to be accessed, if the exception table has the exception record of the resource identifier of the resource to be accessed, determine that a network function in the exception record is the network function where the resource to be accessed is located, and if the exception table has no exception record of the resource identifier of the resource to be accessed, determine the network function where the resource to be accessed is located according to the resource distribution common rule.

Alternatively, the scheduler is further configured to return a resource access response to a user after receiving the resource access response returned by the network function.

Alternatively, the scheduler is further configured to receive a resource migration request including a resource identifier of a resource to be migrated, determine a source network function and a target network function for a resource migration according to the resource identifier, and perform the resource migration between the source network function and the target network function.

Alternatively, the scheduler is further configured to query the exception table in the policy library to determine whether the exception table in the policy library has an exception record of the resource identifier of the resource to be migrated, if the exception table has the exception record of the resource identifier of the resource to be migrated, determine a network function in the exception record as the source network function of the resource to be migrated, if the exception table has no exception record of the resource identifier of the resource to be migrated, determine the source network function where the resource to be migrated is located according to the resource distribution common rule, and determine the target network function of the resource to be migrated according to a migration policy.

Alternatively, the scheduler is further configured to determine whether the source network function is consistent with the target network function; if the source network function is consistent with the target network function, return a migration success response; if the source network function is not consistent with the target network function, initiate a resource access request to the source network function; after acquiring a resource access response from the source network function, initiate the resource application request to the target network function; and after acquiring a resource application success response from the target network function, delete the resource to be migrated from the source network function.

Alternatively, the policy library is further configured to update a record in the exception table according to the migrated resource.

Alternatively, the system further includes a monitor.

The monitor is configured to monitor a usage condition of each virtual network function resource, and create a virtual network function resource when a usage rate of each virtual network function resource exceeds a threshold.

Alternatively, the policy library is further configured to provide and maintain a virtual resource creation rule table. The virtual resource creation rule table is used for maintaining states of all network function resources, and the state includes a usable state and a creatable state. The virtual resource creation rule table further includes a virtual resource creation preferential rule.

The monitor is further configured to acquire a creatable virtual network function resource from the virtual resource creation rule table, determine a virtual network function resource to be created according to the virtual resource creation preferential rule, request a network function virtualization orchestrator (NFVO) to create the virtual network function resource, and update the virtual resource creation rule table after the virtual network function resource is successfully created.

In the preceding embodiments of the present invention, the physical network function resource and the virtual network function resource can be uniformly managed, which can not only meet a practical management requirement for coexistence of the physical network function and the virtual network function in the evolution of technologies and facilitate the resource migration between network functions but also meet a future requirement that the physical network function retires from network.

Other aspects can be understood after the drawings and the detailed description are read and understood.

### BRIEF DESCRIPTION OF DRAWINGS

The drawings described herein are used to provide a further understanding of the present invention, and form a part of the present application. The exemplary embodiments and descriptions thereof in the present invention are used to explain the present invention and do not limit the present invention in any improper way. In the drawings:
FIG. 1 is a flowchart of a resource management method according to an embodiment of the present invention;
FIG. 2 is a schematic diagram illustrating modules of a resource management system according to an embodiment of the present invention;
FIG. 3 is a schematic diagram illustrating a unified resource management architecture according to an embodiment of the present invention;
FIG. 4 is a flowchart of a resource application according to an embodiment of the present invention;
FIG. 5 is a flowchart of a resource access according to an embodiment of the present invention;
FIG. 6 is a flowchart of a resource migration according to an embodiment of the present invention; and
FIG. 7 is a flowchart of a resource capacity expansion according to an embodiment of the present invention.

### DETAILED DESCRIPTION

Hereinafter the present invention will be described in detail with reference to the drawings and in conjunction with embodiments. The embodiments and features therein in the present application may be combined with each other.

A physical network function resource and a virtual network function resource in the existing art are separately managed. Whether a resource belongs to a physical network function or a virtual network function has been determined according to a distribution rule before the resource is applied for, and resource equalization among all network functions cannot be achieved, which is easy to cause resource wastes or shortages. In addition, once the resource is applied for, the resource cannot be migrated from one network function to another network function, and the physical network function cannot be smoothly retired in the future. To solve these problems, the embodiments of the present invention provide the solutions described below.

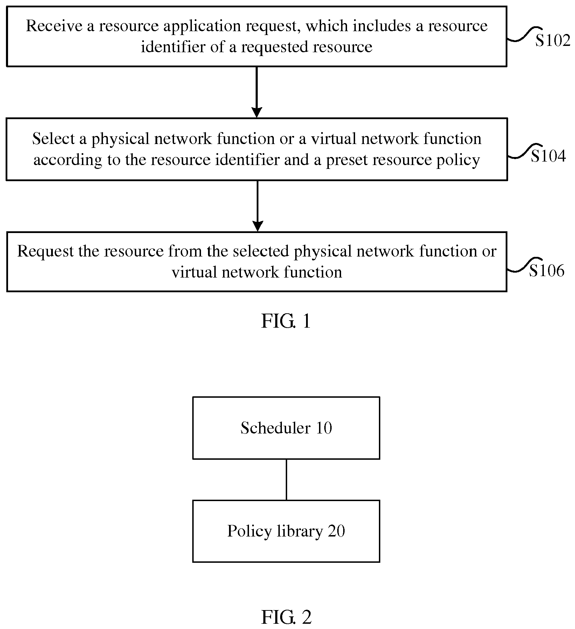

FIG. 1 is a flowchart of a resource management method according to an embodiment of the present invention. As shown in FIG. 1, the method includes steps S102 to S106.

In step S102, a resource application request is received, where the resource application request includes a resource identifier of the requested resource.

In step S104, a physical network function or a virtual network function is selected according to the resource identifier and a preset resource policy.

In step S106, the resource is requested from the selected physical network function or virtual network function.

The resource management method in the embodiments of the present invention may include a resource application, a resource access, a resource migration and a resource capacity expansion.

The resource application is that a resource scheduler determines a network function to be used according to current resource occupancy proportions of different network functions and a priority policy such as a self-customized priority or a specified priority. The priority policy is not limited to the policy described herein.

The resource scheduler acquires, according to the resource identifier in the resource application request and a rule table in a policy library, a network function where the resource identifier is located. If the acquired network function is consistent with a preferred network function, the resource scheduler directly requests the resource from the network function. If the acquired network function is not consistent with the preferred network function, the resource scheduler makes a record in an exception table of the policy library and the record includes a correspondence between the resource identifier and the preferred network function, and then the resource scheduler requests the resource from the network function.

The resource access is that the resource scheduler determines, according to a resource identifier in a resource access request, a network function where a resource is currently located. The resource scheduler queries the exception table of the policy library to acquire the network function corresponding to the resource identifier. If a record of the resource identifier cannot be found, the network function where the resource identifier is located is determined according to the resource identifier in the resource access request and the rule table in the policy library, and the resource is requested from the network function. If the record of the resource identifier is found, a network function in the record is acquired as the network function where the resource identifier is located, and the resource is requested from the network function.

The resource migration is that the resource scheduler determines, according to a resource identifier in a resource migration request, a network function where a resource is currently located. The resource scheduler queries the exception table of the policy library to acquire the network function corresponding to the resource identifier. If a record of the resource identifier cannot be found, the network function where the resource identifier is located is determined according to the resource identifier in the resource migration request and the rule table in the policy library. If the record of the resource identifier is found, a network function in the record is acquired as the network function where the resource identifier is located.

The resource scheduler determines whether the network function where the resource is located is consistent with a target network function. If the network function where the resource is located is consistent with the target network function, the resource scheduler directly returns a migration success response. If the network function where the resource is located is not consistent with the target network function, the resource scheduler requests the resource from the target network function and releases the resource in an original network function. Meanwhile, the resource scheduler deletes or updates the record in the exception table according to whether the resource identifier meets a rule of the policy library.

The resource capacity expansion is that a resource monitor acquires a resource usage rate of each network function. If usage rates of all virtual network functions exceed a threshold, a creatable virtual network function in the rule table is acquired, an NFOV is requested to create the virtual network function, and a state in the rule table of the virtual network function is updated to a usable state.

A unified resource management technology provided by the embodiments of the present invention implements unified scheduling and management of physical network function resources and virtual network function resources. A user no longer needs to care about a network function where the requested resource is located, and the resource scheduler automatically allocates the network function where the requested resource is located according to resource equalization. Resources may also be migrated between different network functions according to usage conditions of the network functions.

In specific implementations, the unified resource management technology in the present invention may be applied to the communications field or the information technology (IT) field after network function virtualization, such as IP Multimedia Subsystem (IMS) communications, circuit switch (CS) communications, Long Term Evolution (LTE)/Evolved Packet System (EPS) and other communications field or IT field.

FIG. 2 is a schematic diagram illustrating modules of a resource management system according to an embodiment of the present invention. As shown in FIG. 2, the resource management system includes a scheduler 10 and a policy library 20.

The scheduler 10 is configured to receive a resource application request including a resource identifier of a requested resource, select a physical network function or a virtual network function according to the resource identifier and a preset resource policy in the policy library, and request the resource from the selected physical network function or virtual network function.

The policy library 20 is configured to provide the resource policy and maintain the resource policy.

In another embodiment of the present invention, the resource management system further includes a monitor in addition to the scheduler and the policy library.

The scheduler is configured to receive a resource application request and a resource access request, and determine, according to a resource identifier and the policy library, a network function where a resource is located. The scheduler is further configured to receive a resource migration request, release a resource in an original network function, request a new resource from a target network function, and maintain an exception table for a resource identifier inconsistent with a rule table to indicate the network function where the resource is located.

The monitor is configured to acquire resource usage condition of each network function, provide usage rate data to a resource scheduler for use, and create a new virtual network function when a usage rate of the virtual network function exceeds a threshold.

The policy library is configured to set network function resource rules including a resource distribution common rule, a resource distribution preferential rule, a virtual resource creation rule and a resource migration rule, and provide the exception table to determine a network function where a resource inconsistent with a resource distribution rule is located through the exception table.

Compared with the related art, the resource management system provided by the embodiments of the present invention achieves that the physical network function resource and the virtual network function resource are uniformly managed, which not only meets a practical management requirement for coexistence of the physical network function and the virtual network function in the evolution of technologies and facilitate a migration of a resource between network functions but also meets a future requirement that the physical network function retires from the network.

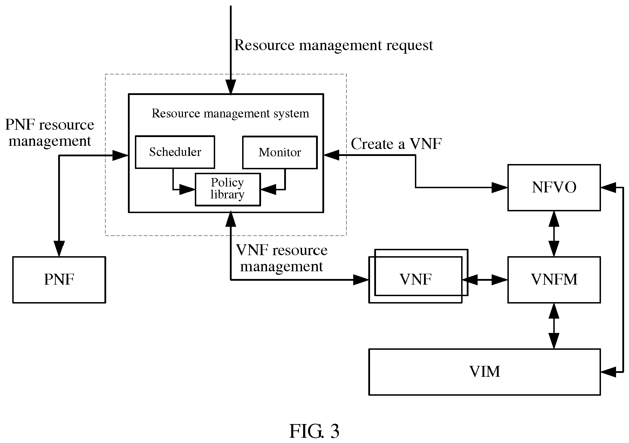

FIG. 3 is a schematic diagram illustrating a unified resource management architecture according to an embodiment of the present invention. A unified resource management system includes a resource scheduler, a resource monitor, a policy library and other modules. Main functions of these modules are to determine a network function according to a resource identifier to implement an application and an access of a network function resource, implement resource migrations between different network functions as needed, and automatically expand usable virtual network function resources according to resource usage conditions.

The resource scheduler is configured to receive a resource application request and a resource access request, and determine, according to the resource identifier and the policy library, a network function where a resource is located. The resource scheduler is further configured to receive a resource migration request, release a resource in an original network function, request a new resource from a target network function, and maintain an exception table for a resource identifier inconsistent with a rule table to indicate the network function where the resource is located.

The resource monitor is configured to acquire a resource usage condition of each network function, provide usage rate data to the resource scheduler for use, and create a new virtual network function when a usage rate of the virtual network function exceeds a threshold.

The policy library is configured to set network function resource rules including a resource distribution common rule, a resource distribution preferential rule, a virtual resource creation rule and a resource migration rule. The policy library is further configured to provide the exception table. Through the exception table, a network function where a resource inconsistent with a resource distribution rule is located is determined.

The resource distribution common rule defines a general distribution policy of resources in each network function. The resources may be distributed according to rules such as number segments and Hash. The resource distribution preferential rule defines a preferential distribution rule of the each network function. Rules such as resource equalization, a self-customized priority and a specified priority may be used.

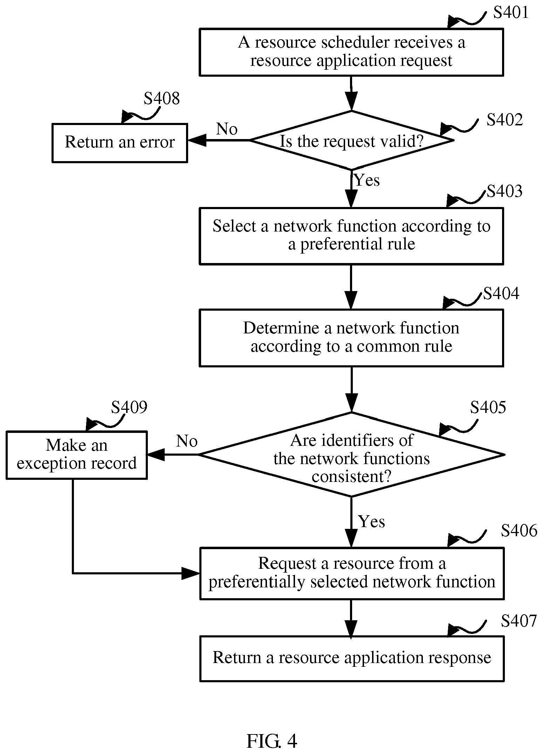

FIG. 4 is a flowchart of a resource application according to an embodiment of the present invention. The flow includes steps S401 to S409 described below.

In step S401, a resource scheduler receives a resource application request. The resource application request is initiated by a resource user (generally an application). The resource application request may include, but is not limited to, a resource identifier and a resource attribute.

The resource identifier is a unique identifier of a resource and equivalent to an identification of the resource. Different resources can be distinguished through the resource identifiers.

The resource attribute is used for describing a characteristic associated with the resource. If the resource is a person, the attribute may include a name, a gender, an age and the like. If the resource is a telephone number, the attribute may include a number type, a number length and the like.

In step S402, the resource scheduler checks the resource application request to determine whether the resource identifier, the resource attribute and the like carried in the resource application request are valid, such as whether a format meets a requirement and whether content meets a limitation. If the validity check is not passed, the process proceeds to step S408. If the validity check is passed, the process proceeds to step 403.

In step S403, the resource scheduler selects a network function that occupies fewest resources according to resource usage rate of each network function provided by a resource monitor, that is, the occupation of fewest resources is taken as a priority to equalize all network function resources.

The resource monitor periodically checks resource occupancy of each network function, and of course, each network function may periodically send its resource occupancy to the resource monitor.

A resource selection principle may be a resource equalization preferential rule, a virtual network preferential rule, or a self-customized preferential rule of each network function, all of which are defined in a policy library.

In step S404, the resource scheduler acquires, according to the resource identifier in the resource application request, a network function where the resource identifier is located and which is determined according to a common distribution policy defined in a rule table.

The common distribution policy provides a default resource identifier distribution rule. If some resources have been used in an existing network function, the distribution of the used resources may be identified to avoid the problem that existing resources cannot be addressed.

In step S405, it is determined whether an identifier of a preferentially selected network function is consistent with an identifier of a commonly distributed network function. If they are inconsistent, the process proceeds to step S409. If they are consistent, the process proceeds to step S406.

In step S406, the resource scheduler requests resource from the preferentially selected network function which includes the resource identifier, the resource attribute and other information.

In step S407, after receiving a resource application response from the network function, the resource scheduler sends the resource application response to the resource user.

In step S408, the resource scheduler sends an error and a specific error reason.

In step S409, the resource scheduler writes an exception record in an exception table via an interface of the policy library. The exception record includes the resource identifier and the network function where the resource is located. The network function where the resource is located may be addressed through the exception record.

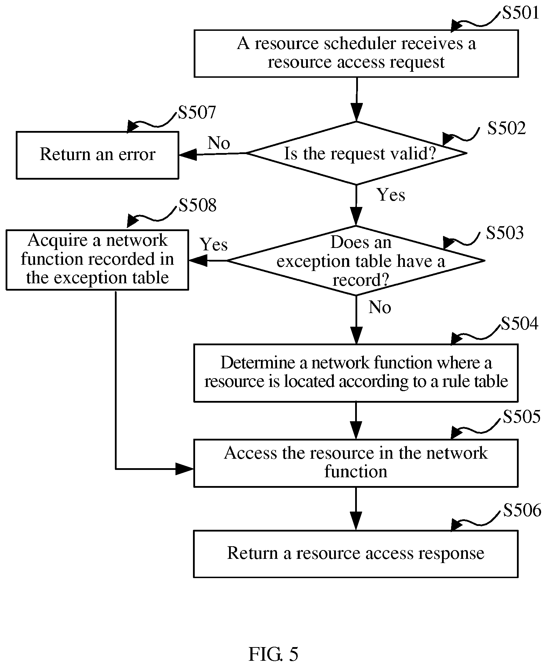

FIG. 5 is a flowchart of a resource access process according to an embodiment of the present invention. The flow includes steps S501 to S506 described below.

In step S501, a resource scheduler receives a resource access request. The resource access request is initiated by a resource user (generally an application). The resource access request may include, but is not limited to, a resource identifier and a resource attribute.

The resource identifier is a unique identifier of a resource and equivalent to an identification of the resource. Different resources can be distinguished through the resource identifiers.

The resource attribute is used for describing a characteristic associated with the resource. If the resource is a person, the attribute may include a name, a gender, an age and the like. If the resource is a telephone number, the attribute may include a number type, a number length and the like.

In step S502, the resource scheduler checks whether the resource identifier, the resource attribute and the like carried in the resource access request are valid, such as whether a format meets a requirement and whether content meets a limitation. If the validity check is not passed, the process proceeds to step S507. If the validity check is passed, the process proceeds to step 503.

In step S503, the resource scheduler needs to address a network function where the resource in the resource access request is located. The resource scheduler queries an exception table to determine whether the exception table has a record of the resource identifier. If the exception table has the record of the resource identifier, the process proceeds to step S508. If the exception table has no record of the resource identifier, the process proceeds to step S504.

In step S504, the resource scheduler determines the network function where the resource is located according to a common distribution rule.

In step S505, the resource scheduler initiates the resource access request to the network function where the resource is located. The resource access request includes the resource identifier, the resource attribute and other information.

In step S506, after receiving a resource access response from the network function, the resource scheduler sends the resource access response to the resource user.

In step S507, the resource scheduler returns an error and a specific error reason.

In step S508, the resource scheduler acquires a network function recorded in the exception table, which is the network function where the resource is located.

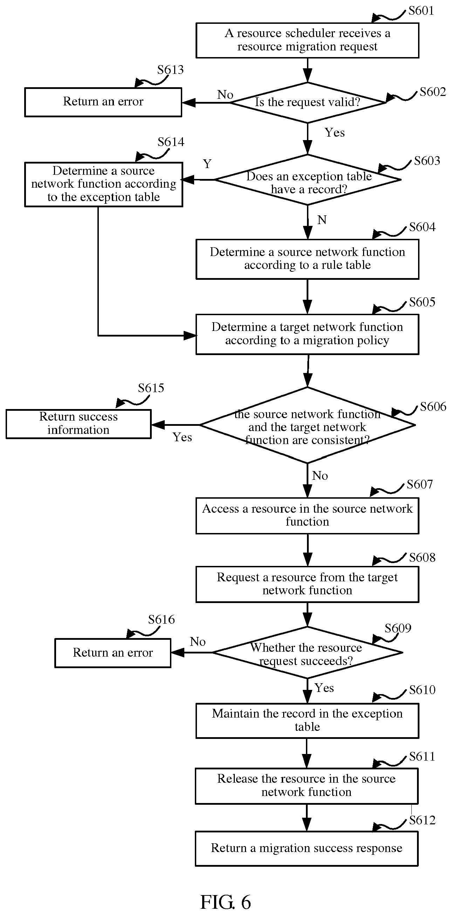

FIG. 6 is a flowchart of a resource migration process according to an embodiment of the present invention. The flow includes steps S601 to S612 described below.

In step S601, a resource scheduler receives a resource migration request. The resource migration request is initiated by a resource user (generally an application). The resource migration request may include, but is not limited to, a resource identifier.

The resource identifier is a unique identifier of a resource and equivalent to an identification of the resource. Different resources can be distinguished through the resource identifiers.

In step S602, the resource scheduler checks whether the resource identifier and the like carried in the resource migration request are valid, such as whether a format meets a requirement and whether content meets a limitation. If the validity check is not passed, the process proceeds to step S613. If the validity check is passed, the method proceeds to step 603.

In step S603, the resource scheduler needs to address a network function where the resource in the resource migration request is located. The resource scheduler queries an exception table to determine whether the exception table has a record of the resource identifier. If the exception table has the record of the resource identifier, the process proceeds to step S614. If the exception table has no record of the resource identifier, the process proceeds to step S604.

In step S604, the resource scheduler determines a source network function where the resource is located according to a common distribution rule.

In step S605, the resource scheduler determines a target network function for the resource migration according to a migration policy. The target network function may be defined in a migration rule, including a priority of the target network function, a specified network function, the common distribution rule and the like.

In step S606, it is determined whether the source network function of the resource is consistent with the target network function for the resource migration. If they are consistent, the resource does not need to be migrated and the process proceeds to step S615. If they are not consistent, the resource needs to be migrated and the method proceeds to step S607.

In step S607, the resource scheduler initiates a resource access request including the resource identifier and the like to the network function where the resource is located to acquire all attribute information of the resource. The resource access request supports a query, modification and deletion of the resource. The query of the resource is used herein.

In step S608, after acquiring a resource access response from the source network function, the resource scheduler initiates a resource application request to the target network function. The resource application request carries the resource identifier, the acquired resource attribute and the like.

In step S609, if the target network function returns resource application failure information, the process proceeds to step S616. If the target network function returns resource application success information, the process proceeds to step S610.

In step S610, the resource scheduler maintains the record in the exception table. The exception table does not need to be maintained if the resource identifier meets the common distribution rule of the target network function and the exception table has no record of the resource identifier.

The record in the exception table needs to be deleted if the resource identifier meets the common distribution rule of the target network function and the exception table has the record of the resource identifier.

The record needs to be inserted in the exception table if the resource identifier does not meet the common distribution rule of the target network function and the exception table has no record of the resource identifier. The record includes the resource identifier and the target network function.

The record in the exception table needs to be update if the resource identifier does not meet the common distribution rule of the target network function and the exception table has the record of the resource identifier. The source network function in the record is replaced with the target network function.

In step S611, the resource scheduler initiates the resource access request to the source network function and deletes the resource in the source network function. The resource access request supports the query, modification and deletion of the resource. The deletion of the resource is used herein.

In step S612, after receiving a resource deletion response from the source network function, the resource scheduler returns a resource migration response to the resource user.

In step S613, the resource scheduler returns an error and a specific error reason.

In step S614, the resource scheduler determines the source network function according to the exception table. The network function in the record of the resource identifier is the source network function where the resource is located.

In step S615, the resource scheduler directly returns success information.

In step S616, the resource scheduler returns an error and a specific error reason to the resource user.

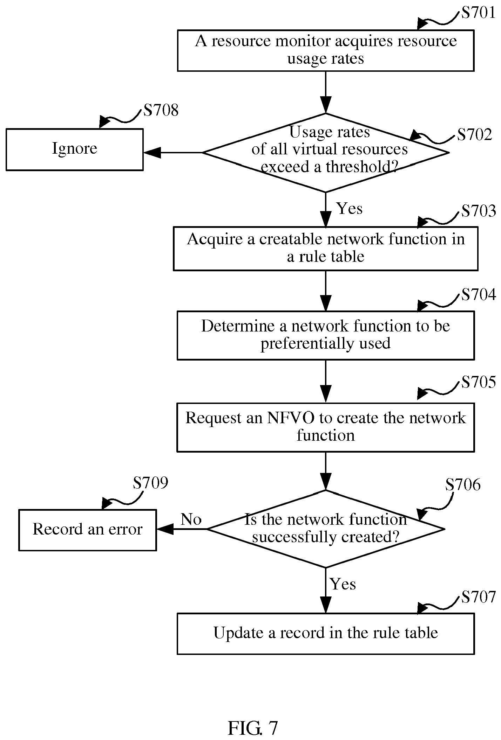

FIG. 7 is a flowchart of a resource capacity expansion process according to an embodiment of the present invention. The flow includes steps S701 to S709 described below.

In step S701, a resource monitor periodically acquires a resource usage rate of each network function. A request for acquiring the resource usage rate is initiated by the resource monitor. Alternatively, each network function may periodically report its resource usage rate data to the resource monitor.

In step S702, the resource monitor checks whether all of virtual resource usage rates have exceeded a threshold. A value of the threshold is recorded in a policy library and may be adjusted by a maintainer. If none of the virtual resource usage rates exceeds the threshold, the process proceeds to S708. If all of the virtual resource usage rates exceed the threshold, the process proceeds to S703.

In step S703, the resource monitor acquires a creatable network function from a rule table. A state of each network function is maintained in the rule table. The state includes a usable state, a creatable state and the like. Resource can be requested from a usable network function. The creatable network function does not have established resources and cannot be used for resource allocation to the user.

In step S704, the resource monitor determines a network function to be preferentially created. A preferential rule may be a priority, a specified network function or the like.

In step S705, the resource monitor sends a request to an NFVO for creating a virtual network function. The request carries a preset network function parameter such as a capacity.

In step S706, it is determined whether the NFVO succeeds in creating the virtual network function. If the NFVO fails to create the virtual network function, the process proceeds to step S709. If the NFVO succeeds in creating the virtual network function, the process proceeds to step S707.

In step S707, the resource monitor updates a state in the rule table of this network function to be usable.

In step S708, the resource monitor ignores the check.

In step S709, the resource monitor records an error and a specific error reason.

The embodiments of the present invention further provide a storage medium. In this embodiment, the storage medium may be configured to store program codes or computer-executable instructions for executing the steps in the embodiments described above.

Alternatively, in this embodiment, the storage medium may include, but is not limited to, a USB flash disk, a read-only memory (ROM), a random access memory (RAM), a mobile hard disk, a magnetic disk, an optical disk or another medium capable of storing program codes. For specific examples in this embodiment, reference may be made to the examples described in the above-mentioned embodiments and optional implementation modes, and the specific examples will not be repeated in this embodiment.

Apparently, it should be understood by those skilled in the art that each of the above-mentioned modules or steps of the present invention may be implemented by a general-purpose computing device, the modules or steps may be concentrated on a single computing device or distributed on a network composed of multiple computing devices. Alternatively, each of the modules or steps of the present invention may be implemented by program codes executable by the computing device, so that the modules or steps may be stored in a storage device and executed by the computing device. In some circumstances, the illustrated or described steps may be executed in sequences different from those described herein, or the modules or steps may be made into various integrated circuit modules separately, or multiple modules or steps therein may be made into a single integrated circuit module for implementation.

The above are only optional embodiments of the present invention and are not intended to limit the present invention, and for those skilled in the art, the present invention may have various modifications and variations.

### INDUSTRIAL APPLICABILITY

In the above embodiments of the present invention, a physical network function resource and a virtual network function resource can be uniformly managed, which can not only meet a practical management requirement for coexistence of the physical network function and the virtual network function in the evolution of technologies and facilitate the resource migration between network functions but also meet a future requirement that the physical network function retires from the network.

## Claims

1. A resource management method, comprising:
receiving a resource application request, wherein the resource application request comprises a resource identifier of a requested resource;
selecting a physical network function or a virtual network function according to the resource identifier and a preset resource policy; and
requesting the resource from the selected physical network function or virtual network function.

2. The resource management method of claim 1, wherein the resource policy comprises a resource distribution preferential rule and a resource distribution common rule, wherein the resource distribution preferential rule comprises at least one of: a virtual network function resource preferential rule and a resource equalization preferential rule.

3. The resource management method of claim 2, wherein selecting the physical network function or the virtual network function according to the resource identifier and the preset resource policy comprises:
selecting the physical network function or the virtual network function as a target network function of a resource application according to the resource distribution preferential rule;
determining a network function where the resource identifier is located according to the resource distribution common rule; and
determining whether the target network function of the resource application is consistent with the network function where the resource identifier is located, and based on a determining result that the target network function of the resource application is not consistent with the network function where the resource identifier is located, making an exception record in an exception table, wherein the exception record comprises the resource identifier and the selected network function.

4. The resource management method of claim 2, wherein selecting the physical network function or the virtual network function according to the resource identifier and the preset resource policy comprises:
selecting, according to the resource distribution common rule, a network function where the resource identifier is located as a target network function of a resource application.

5. The resource management method of any one of claims 1 to 4, wherein after requesting the resource from the selected physical network function or virtual network function, the method further comprises:
after receiving a resource application response returned by the selected network function, returning the resource application response to a resource applicant.

6. The resource management method of claim 5, further comprising:
receiving a resource access request, wherein the resource access request comprises a resource identifier of a resource to be accessed;
determining, according to the resource identifier of the resource to be accessed, a network function where the resource to be accessed is located; and
initiating the resource access request to the network function where the resource to be accessed is located.

7. The resource management method of claim 6, wherein determining, according to the resource identifier of the resource to be accessed, the network function where the resource to be accessed is located comprises:
querying whether the exception table has an exception record of the resource identifier of the resource to be accessed;
based on a query result that the exception table has the exception record of the resource identifier of the resource to be accessed, determining that a network function in the exception record is the network function where the resource to be accessed is located, and
based on a query result that the exception table has no exception record of the resource identifier of the resource to be accessed, determining the network function where the resource to be accessed is located according to the resource distribution common rule.

8. The resource management method of claim 6, wherein after initiating the resource access request to the network function where the resource to be accessed is located, the method further comprises:
after receiving a resource access response returned by the network function, returning the resource access response to a user.

9. The resource management method of claim 5, further comprising:
receiving a resource migration request, wherein the resource migration request comprises a resource identifier of a resource to be migrated;
determining a source network function and a target network function for a resource migration according to the resource identifier; and
performing the resource migration between the source network function and the target network function.

10. The resource management method of claim 9, wherein determining the source network function and the target network function for the resource migration according to the resource identifier comprises:
querying whether the exception table has an exception record of the resource identifier of the resource to be migrated,
based on a query result that the exception table has the exception record of the resource identifier of the resource to be migrated, determining that a network function in the exception record is the source network function of the resource to be migrated, and based on a query result that the exception table has no exception record of the resource identifier of the resource to be migrated, determining the source network function where the resource to be migrated is located according to the resource distribution common rule; and
determining the target network function of the resource to be migrated according to a migration policy.

11. The resource management method of claim 10, wherein performing the resource migration between the source network function and the target network function comprises:
determining whether the source network function is consistent with the target network function; based on a determining result that the source network function is consistent with the target network function, returning a migration success response; based on a determining result that the source network function is not consistent with the target network function, initiating a resource access request to the source network function; after acquiring a resource access response from the source network function, initiating the resource application request to the target network function; and after acquiring a resource application success response from the target network function, deleting the resource to be migrated from the source network function.

12. The resource management method of claim 11, wherein after performing the resource migration between the source network function and the target network function, the method further comprises:
updating the exception record in the exception table according to the migrated resource, and returning a resource migration response to a resource migration requester.

13. The resource management method of claim 5, further comprising:
creating a virtual network function resource upon detecting that a usage rate of the virtual network function resource exceeds a threshold.

14. The resource management method of claim 13, wherein creating the virtual network function resource comprises:
acquiring a creatable network function from a virtual resource creation rule table, wherein the virtual resource creation rule table is used for maintaining a state of each network function resource, and the state comprises a usable state and a creatable state; and
determining and creating a preferential virtual network function resource according to a virtual resource creation preferential rule, creating the virtual network function resource, and updating the virtual resource creation rule table after the virtual network function resource is successfully created.

15. A resource management system, comprising: a scheduler and a policy library;
wherein the scheduler is configured to receive a resource application request comprising a resource identifier of a requested resource, select a physical network function or a virtual network function according to the resource identifier and a preset resource policy in the policy library, and request the resource from the selected physical network function or virtual network function; and
the policy library is configured to provide the resource policy and maintain the resource policy.

16. The resource management system of claim 15, wherein the resource policy comprises a resource distribution preferential rule and a resource distribution common rule, wherein the resource distribution preferential rule comprises at least one of: a virtual network function resource preferential rule and a resource equalization preferential rule.

17. The resource management system of claim 16, wherein
the policy library is further configured to provide and maintain the resource distribution preferential rule, the resource distribution common rule and an exception table; and
the scheduler is further configured to select the physical network function or the virtual network function as a target network function of a resource application according to the resource distribution preferential rule, determine a network function where the resource identifier is located according to the resource distribution common rule, determine whether the target network function of the resource application is consistent with the network function where the resource identifier is located, and if the target network function of the resource application is not consistent with the network function where the resource identifier is located, make an exception record in the exception table, wherein the exception record at least comprises the resource identifier and the selected network function.

18. The resource management system of claim 17, wherein
the scheduler is further configured to, after receiving a resource application response returned by the selected network function, return the resource application response to a resource applicant.

19. The resource management system of claim 18, wherein
the scheduler is further configured to receive a resource access request comprising a resource identifier and a resource attribute of a resource to be accessed, determine, according to the resource identifier and the resource attribute of the resource to be accessed, a network function where the resource to be accessed is located, and initiate the resource access request to the network function where the resource to be accessed is located.

20. The resource management system of claim 19, wherein
the scheduler is further configured to query whether the exception table in the policy library has an exception record of the resource identifier of the resource to be accessed, if the exception table has the exception record of the resource identifier of the resource to be accessed, determine a network function in the exception record as the network function where the resource to be accessed is located, and if the exception table has no exception record of the resource identifier of the resource to be accessed, determine the network function where the resource to be accessed is located according to the resource distribution common rule.

21. The resource management system of claim 20, wherein the scheduler is further configured to, after receiving a resource access response returned by the network function, return the resource access response to a user.

22. The resource management system of claim 18, wherein the scheduler is further configured to receive a resource migration request comprising a resource identifier of a resource to be migrated, determine a source network function and a target network function for a resource migration according to the resource identifier, and perform the resource migration between the source network function and the target network function.

23. The resource management system of claim 22, wherein
the scheduler is further configured to determine whether the exception table in the policy library has an exception record of the resource identifier of the resource to be migrated; if the exception table has the exception record of the resource identifier of the resource to be migrated, determine a network function in the exception record as the source network function of the resource to be migrated; if the exception table has no exception record of the resource identifier of the resource to be migrated, determine the source network function where the resource to be migrated is located according to the resource distribution common rule; and determine the target network function of the resource to be migrated according to a migration policy.

24. The resource management system of claim 22, wherein
the scheduler is further configured to determine whether the source network function is consistent with the target network function; if the source network function is consistent with the target network function, return a migration success response; if the source network function is not consistent with the target network function, initiate a resource access request to the source network function; after acquiring a resource access response from the source network function, initiate the resource application request to the target network function; and after acquiring a resource application success response from the target network function, delete the resource to be migrated from the source network function.

25. The resource management system of claim 22, wherein
the policy library is further configured to update a record in the exception table according to the resource to be migrated.

26. The resource management system of claim 15, further comprising:
a monitor, configured to monitor a usage condition of each virtual network function resource, and create a virtual network function resource when a usage rate of the virtual network function resource exceeds a threshold.

27. The resource management system of claim 26, wherein
the policy library is further configured to provide and maintain a virtual resource creation rule table, wherein the virtual resource creation rule table is used for maintaining a state of each network function resource, and the state comprises a usable state and a creatable state; and the virtual resource creation rule table further comprises a virtual resource creation preferential rule; and
the monitor is further configured to acquire a creatable virtual network function resource from the virtual resource creation rule table, determine a virtual network function resource to be created according to the virtual resource creation preferential rule, request a network function virtualization orchestrator, NFVO, to create the virtual network function resource, and update the virtual resource creation rule table after the virtual network function resource is successfully created.

28. A computer-readable storage medium, configured to store computer-executable instructions for executing the method of any one of claims 1 to 14.
